# EUROPÄISCHE PATENTANMELDUNG

(11) **EP 1 063 071 A2**
(43) Veröffentlichungstag der Anmeldung: **27.12.2000**
(21) Anmeldenummer: 00104872.7
(22) Anmeldetag: 07.03.2000
(51) Int. Cl.: B29C 33/42, B29C 33/38, B60C 13/00, B23K 26/00, B29K 105/08, B29K 21/00

(54) **Polymerartikel, insbesondere Fahrzeugreifen, mit strukturierter Oberfläche, Formwerkzeug und seine Herstellung**

(30) Priorität: 24.06.1999 DE 19928863
(71) Anmelder: Continental Aktiengesellschaft, 30165 Hannover (DE)
(72) Erfinder: Pfaff, Daniel, D-30938 Burgwedel (DE); Gleissle, Susanne Eva, D-30989 Gehrden (DE); Dr.Mundl, Reinhard, D-30539 Hannover (DE)

(57) **Zusammenfassung**

Die Erfindung befasst sich mit einem Polymerartikel mit einer sichtbaren Oberfläche, wobei entweder zumindest ein Teil der Oberfläche in solcher Weise geriffelt ist, dass der Abstand von Riffelgrat zu Riffelgrat zwischen 4 µm und 40 µm beträgt oder zumindest ein Teil der Oberfläche in solcher Weise genoppt ist, dass der Abstand (b) von Noppenspitze zu Noppenspitze zwischen 5 µm und 60 µm beträgt.

## Beschreibung

Die Erfindung betrifft einen Polymerartikel mit einer sichtbaren Oberfläche und ein Verfahren zur Herstellung einer Form für die Herstellung eines Polymerartikels.

Aus der WO 96/04123 ist es bekannt, Gegenstände mit einer künstlichen Oberflächenstruktur aus Erhebungen und Vertiefungen zu versehen, wobei der Abstand zwischen den Erhebungen im Bereich zwischen 5 und 200 µm und die Höhe der Erhebungen im Bereich zwischen 5 und 100 µm liegen soll. Zumindest die Erhebungen bestehen dabei aus hydrophoben Polymeren oder haltbar hydrophobierten Materialien. Zweck dieser Erhebungen ist es, eine Selbstreinigung der Oberfläche des Gegenstandes zu erzielen. Zur Schaffung der Oberflächenstruktur wird vorgeschlagen, diese bereits bei der Herstellung des Gegenstandes aus hydrophoben Polymeren zu erstellen oder nachträglich entweder durch Prägen oder Ätzen oder durch Aufkleben eines Pulvers aus hydrophoben Polymeren oder durch nachträgliches haltbares Hydrophobieren zuvor hergestellter Oberflächen mit den gewünschten Strukturen vorzunehmen. Dabei wurde hier bereits erkannt, dass die Oberläche von Gegenständen künstlich selbstreinigend gemacht werden kann, indem sie mit einer Oberflächenstruktur aus Erhebungen und Vertiefungen versehen wird. Die diesem Dokument entnehmbare Lehre erlaubt es jedoch nicht, bei einer praktischen Umsetzung zufriedenstellende Ergebnisse hinsichtlich der Selbstreinigung, vor allem was das Verhindern der Anlagerung von Schmutzpartikeln und was das Begünstigen des Abrollens von Wassertropfen von der Oberfläche betrifft, zu erzielen.

Ein Polymerartikel, und zwar ein Fahrzeugreifen, bei dem die Oberfläche der Seitenwand mit einer mikroskopischen Gestalt versehen ist, ist beispielsweise aus der EP-B-0 101 399 bekannt. Hier wird die Seitenwandoberfläche so ausgeführt, dass Aufdrucke oder Musterungen an der Oberfläche eine Oberflächenrauigkeit, die in dieser Druckschrift als Finish bezeichnet ist, aufweisen, die von der Oberflächenrauigkeit jener Bereiche, die die Aufdrucke oder Musterungen umgeben, abweicht. Die Ausführung erfolgt dabei bevorzugt derart, dass die Oberflächenrauigkeit der Aufdrucke oder Musterungen etwa 0,25 x 10⁻³ mm und die Oberflächenrauigkeit jenes Seitenwandbereiches, der die Aufdrucke oder Musterungen umgibt, etwa 1,27 x 10⁻³ mm beträgt. Die Oberfläche der Aufdrucke bzw. der Musterungen wird ferner derart ausgebildet, dass sie bündig mit der umgebenden Oberfläche abschließt, so dass insgesamt eine glatte Gesamtoberfläche geschaffen wird. Damit soll insbesondere eine möglichst ansprechende Gestaltung der Seitenwände eines Reifens erfolgen, bei dem auf das Vorsehen scharfer Kanten durch die Ausbildung von speziell gestalteten Erhebungen und dergleichen verzichtet wird.

Die oft sehr hartnäckige Anlagerung von Schmutzpartikeln auf der Oberfläche von Polymerartikeln unterschiedlicher Art machen Bemühungen, deren Oberflächen möglichst ansprechend zu gestalten, zumindest zum Teil wieder zunichte. Es wurden auch schon verschiedene Maßnahmen entwickelt und vorgeschlagen, um etwa die Erkennbarkeit von Strukturierungen an der Oberfläche von Reifenseitenwänden auch bei Schmutzanlagerungen auf eine insgesamt ästhetische Art und Weise sicherzustellen. Dazu wird in der AT-B-397 373 vorgeschlagen, Seitenwandmusterungen aus fächerartig zum Wulstbereich zusammenlaufenden Erhebungen zusammenzusetzen. Hier ist sogar erwähnt, dass durch eine unterschiedliche Anlagerung von Staubpartikeln im Bereich der Erhebungen eine bessere Sichtbarkeit erzielt wird. Aus der DE-A 28 55 700 ist es bekannt, an den Reifenseitenwänden ein Reliefmuster auszubilden, welches sich aus Facetten einer Tiefe von weniger als 2 mm zusammensetzt, die so geformt sind, dass sie gegenüber der Normalen auf die Reifenoberfläche einen Winkel von 10 bis 80° einschließen. Darüber hinaus wird hier vorgeschlagen, die Oberflächenrauigkeit einer Facette von der Oberflächenrauigkeit einer anderen Facette verschieden zu gestalten und die Oberflächenrauigkeit von Facetten abweichend von jener der übrigen Oberfläche der Seitenwände zu wählen. Erwähnt ist beispielsweise eine Oberflächenrauigkeit größer als 5 µm für die außerhalb der Facetten liegenden Bereiche der Seitenwände und kleiner als 0,5 µm für die Oberflächen der Facetten.

Bislang ist es jedoch nicht gelungen, die Oberfläche bzw. Bereiche der Oberfläche von Polymerartikeln so zu gestalten, dass sich Schmutzpartikel von vornherein kaum anlagern können und auch eine gute Selbstreinigung möglich ist. Die Erfindung hat sich nun die Aufgabe gestellt, eine Lösung für dieses Problem aufzufinden.

Gelöst wird die gestellte Aufgabe erfindungsgemäß dadurch, dass entweder zumindest ein Teil der Oberfläche in solcher Weise geriffelt ist, dass der Abstand von Riffelgrat zu Riffelgrat zwischen 4 µm und 40 µm beträgt oder zumindest ein Teil der Oberfläche in solcher Weise genoppt ist, dass der Abstand von Noppenspitze zu Noppenspitze zwischen 5 µm und 60 µm beträgt.

Die gemäß der gegenständlichen Erfindung vorgeschlagene mikroskopische Gestalt von Oberflächen mit Mikroerhebungen ― Riffelungen oder Noppen - ist in der Lage, eine sehr gute Selbstreinigung sicherzustellen. Dieser Selbstreinigungseffekt beruht vorrangig auf der besonderen Dimensionierung und der Gestalt der vorgeschlagenen Mikroerhebungen. Dadurch stellt sich der Effekt ein, dass Schmutzpartikel nur auf den Spitzen bzw. Graten der Mikroerhebungen zu sitzen kommen dadurch sehr wenig Kontakt, sprich Haftungsfläche, zum Untergrund haben. Die mikroskopische Gestalt bedingt ferner, dass Wassertropfen auf den Spitzen der Mikroerhebungen abrollen und, wenn vorhanden, die Schmutzpartikel mitnehmen. Die erfindungsgemäße mikroskopische Gestalt von Oberflächen ist in Anlehnung an die mikroskopische Gestalt der Oberfläche eines Lotusblattes gestaltet. Es ist ja bekannt, dass Lotusblätter die Fähigkeit besitzen, sich von Schmutzpartikeln bzw. Schmutzfilmen selbst zu reinigen

Besonders vorteilhafte Ausgestaltungen und Weiterentwicklungen der Erfindung sind in den Unteransprüchen enthalten.

So ist es für eine Optimierung des erzielbaren Selbstreinigungseffektes von Vorteil, wenn der Abstand von Riffelgrat zu Riffelgrat ≤ 15 µm und der Abstand von Noppenspitze zu Noppenspitze ≤ 20 µm. Damit ist sichergestellt, dass vor allem die hartnäckigen kleiner dimensionierten Schmutzpartikel tatsächlich nur auf den Spitzen bzw. Graten der Mikroerhebungen sitzen und somit wenig Haftungsfläche zum Untergrund haben.

Gleichzeitig sollte der gegenseitige Abstand der die Riffelung bildenden Erhebungen an deren Basis bzw. der gegenseitige Abstand der Noppen an deren Basis zwischen 5 und 10 µm beträgt.

Als für den Selbstreinigungseffekt günstig hat es sich herausgestellt, wenn die Ausführung der die Riffelung bildenden Erhebungen bzw. Noppen so getroffen wird, dass die Riffelgrate bzw. die Noppenspitzen um mindestens 10 µm die jeweils umgebenden Täler der mikroskopischen Oberflächengestalt überragen, dass ferner die Höhe der die Riffelung bildenden Erhebungen bzw. Noppen zumindest 15 µm beträgt, und dass die größte Breite der die Riffelung bildenden Erhebungen bzw. Noppen zumindest im Wesentlichen mit ihrer jeweiligen Höhe übereinstimmt. Gerade in diesen Bereichen wird den Mikroerhebungen eine gewisse Stabilität verliehen, die ebenfalls für den erwünschten Effekt der Selbstreinigung von Vorteil ist.

Die die Riffelung bildenden Erhebungen bzw. die Noppen können nun zumindest zum Teil unterschiedliche Größe aufweisen oder auch zumindest im Wesentlichen übereinstimmende Größe besitzen. Innerhalb der oben erwähnten Bereiche für den gegenseitigen Abstand der die Riffelung bildenden Erhebungen bzw. Noppen können diese nun sowohl regelmäßig als auch unregelmäßig angeordnet werden. Es scheint nun so zu sein, dass gewisse Unregelmäßigkeiten, sei es in der Größe oder in der Anordnung, den erzielbaren Selbstreinigungseffekt etwas mehr begünstigen als eine regelmäßige Anordnung und übereinstimmende Größe der Erhebungen bzw. Noppen.

Bei einer bevorzugten Ausführungsform werden die Noppen bzw. es wird der Querschnitt der die Riffelung bildenden Erhebungen zumindest im Wesentlichen kuppelförmig ausgeführt. Damit wird eine weitgehende Ähnlichkeit zur Struktur der Oberfläche von Lotusblättern erreicht wird, was sich für den Selbstreinigungseffekt ebenfalls als vorteilhaft herausgestellt hat.

Erfindungsgemäß gestaltete Oberflächen von Polymerartikeln haben eine Gestalt in einem sehr klein dimensionierten Bereich und können daher eine gewisse Empfindlichkeit gegenüber mechanischen Beanspruchungen aufweisen. Es ist daher günstig, wenn die geriffelt oder genoppt ausgeführten Bereiche der Oberfläche gegenüber der übrigen Oberfläche versenkt werden.

Solche geriffelt und/oder genoppt ausgeführten Bereiche können nun Buchstaben, Ziffern, Markenzeichen oder Kombinationen aus diesen sein und können insgesamt oder einzeln für sich gesehen gegenüber den umgebenden Oberflächenbereichen versenkt sein.

Zum Schutz der empfindlichen Oberfläche der erfindungsgemäß geriffelt und/oder genoppt ausgeführten Buchstaben, Ziffern, Zeichen etc. können diese auch so gestaltet werden, dass sie jeweils von einem erhabenen Rand umschlossen sind und die geriffelt und/oder genoppt ausgeführten Oberflächen gegenüber diesem erhabenen Rand versenkt sind.

Bei einem erfindungsgemäß ausgeführten Polymerartikel handelt es sich insbesondere um einen Gummiartikel, vorzugsweise um einen Fahrzeugreifen, auf dessen Seitenwänden sich erfindungsgemäß ausgeführte geriffelt und/oder genoppt gestaltete Oberflächenbereiche befinden.

Erfindungsgemäß ausgeführte Polymerartikel können insbesondere auch polymerbeschichtete Textilbahnen sein, ferner Schläuche oder auch Förderbänder.

Aus dem Stand der Technik sind bislang keine Verfahren bekannt, mit welchen sich eine erfindungsgemäße Noppen oder Riffelung einer Oberfläche eines Polymerartikels, insbesondere eines Gummiartikels, tatsächlich herstellen lässt. Die Herstellung scheiterte lange Zeit daran, dass mittels der im Bau von Vulkanisationsformen üblichen Herstellungsverfahren, wie Schmieden, Gießen, Fräsen, Polieren, keine solche Metalloberflächen erzeugbar waren, die am abgeformten Gummibauteil die erwünschte Oberfläche ergäben hätten.

Durch im Rahmen der gegenständlichen Erfindung entwickelte Verfahren lassen sich jedoch solche Oberflächen herstellen.

Diese Verfahren zur Herstellung einer Form für die Herstellung eines Polymerartikels, insbesondere zur Herstellung einer Vulkanisationsform für die Herstellung eines Gummiartikels, sind in den Ansprüchen 26, 27 und 28 gekennzeichnet. Dabei sehen sämtliche dieser Verfahren eine Bearbeitung von Formenteilen mittels Laser vor.

Weitere Merkmale, Vorteile und Einzelheiten der Erfindung werden nun anhand der Zeichnung, die einige Ausführungsbeispiele darstellt, näher beschrieben. Die Zeichnungsfiguren sind dabei schematische Darstellungen. Es zeigen
Fig. 1 eine teilweise der Seitenansicht eines Fahrzeugreifens mit einer ersten Ausführungsform der Erfindung,
Fig. 2 einen stark vergrößerten, nicht maßstabsgetreuen Schnitt durch das Detail A der Fig. 1,
Fig. 3 eine Variante des Details A aus Fig. 1, analog zu Fig. 2,
Fig. 4 eine teilweise Seitenansicht eines Fahrzeugreifens mit einer zweiten Ausführungsform der Erfindung,
Fig. 4a einen Schnitt entlang der Linie IVa ― IVa der Fig. 4,
Fig. 4b eine stark vergrößerte, nicht maßstabsgetreue Ansicht des Details B aus Fig. 4 und
Fig. 5 und 6 weitere Ausführungsvarianten der Erfindung anhand von zu Fig. 1 analogen Darstellungen eines Fahrzeugreifens.

Die Erfindung befasst sich generell mit besonderen Ausgestaltungen der sichtbaren Oberflächen verschiedener Polymerartikel, wird jedoch konkret am Beispiel eines beliebigen Fahrzeugreifens, der beispielsweise ein Reifen für Personenkraftwagen oder Lastkraftwagen sein kann, erläutert.

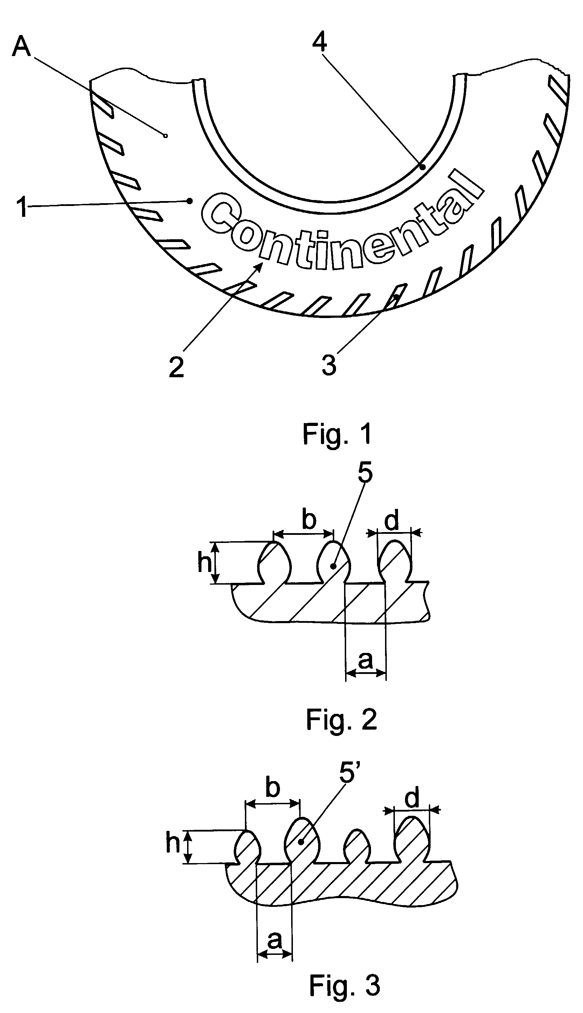

**Fig. 1** zeigt einen Teilbereich der Seitenansicht eines Reifens und somit dessen Seitenwand 1, wobei beispielhaft jener Bereich dargestellt ist, wo ein Schriftzug 2, hier ist es der Schriftzug CONTINENTAL, aufgebracht ist. Der Schriftzug 2 besteht bei dieser Ausführungsvariante der Erfindung aus gegenüber der sonstigen Seitenwandfläche leicht erhaben ausgeführten Buchstaben, die eine glatte Oberfläche aufweisen, die durch eine entsprechend glatte Ausführung der diese Buchstaben formenden Vertiefungen in den Seitenwandsegmenten der den Reifen vulkanisierenden Vulkanisationsform gebildet werden.

Zu sehen sind ferner an der äußeren Peripherie der Seitenwand die von einem nicht dargestellten Laufstreifenprofil kommenden und hier auslaufenden Nuten 3. An der inneren Peripherie schließt einer der Wulstbereiche 4 des Reifens an.

Jener Bereich der Seitenwand 1, der zwischen den Enden der auslaufenden Nuten 3 und dem Wulstbereich 4 verläuft und frei von Beschriftungen ist, demnach die Bereiche außerhalb des Schriftzuges CONTINENTAL, weisen eine besondere mikroskopische Gestalt auf.

Unter Bezugnahme auf Fig. 2 und Fig. 3 werden nun zwei mögliche Ausführungen dieser mikroskopischen Gestalt erläutert, die sich aus noppenförmigen Mikroerhebungen 5, 5 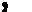 bestimmter Größe und Anordnung zusammensetzt.

Bei den in **Fig. 2 und Fig. 3** dargestellten Ausführungsformen sind die Noppen 5, 5' zumindest im Wesentlichen kuppelförmig gestaltet. Beim Ausführungsbeispiel gemäß Fig. 2 sind dabei die Noppen 5 zumindest im Wesentlichen sämtlich übereinstimmend groß ausgeführt und zumindest im Wesentlichen regelmäßig angeordnet. Sie besitzen eine Höhe h, die um mindestens 10 µm die jeweils umgebenden Taler der mikroskopischen Oberflächengestalt überragt, wobei h zwischen 10 und 25 µm, insbesondere zwischen 15 bis 20 µm, gewählt wird. Ihr Durchmesser d an der breitesten Stelle entspricht im Wesentlichen ihrer Höhe h bzw. ist geringfügig größer oder kleiner als diese. Der gegenseitige Abstand a an der Basis benachbarter Noppen 5 beträgt zwischen 5 und 25 µm, insbesondere zwischen 15 bis 20 µm. Der Abstand b von Noppenspitze zu Noppenspitze beträgt zwischen 5 und 60 µm und ist insbesondere ≤ 20µm, vorzugsweise zwischen 15 µm und 20 µm.

Fig. 3 zeigt eine Ausführungsform mit unregelmäßig ausgeführten und unregelmäßig angeordneten kuppelförmigen Noppen 5'. Auch bei dieser Variante gelten die erwähnten Bereiche für die Abmessungen a, h, d, und b.

Bei beiden Ausführungsvarianten sind die Spitzen bzw. die Spitzenbereiche der Noppen 5, 5 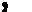 jeweils mit einem Oberflächenkrümmungsradius zwischen 3 µm und 25 µm versehen.

Kuppelförmige Noppen 5 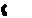 mit gewissen Unregelmäßigkeiten, wie sie etwa in Fig. 3 dargestellt sind, sind aus der Natur bekannt und zwar von der Oberflächen von Lotusblättern, die durch abperlende bzw. über die Oberfläche fließende Wassertropfen die Fähigkeit haben, sich von Schmutzpartikeln bzw. Schmutzfilmen, auch von sehr hartnäckigen, selbst zu reinigen. Wie sich im Rahmen der Erfindung herausgestellt hat, stellt sich dieser Effekt auch bei aus Gummi bestehenden und entsprechend bzw. ähnlich gestalteten Oberflächen ein. Dafür ist einerseits die spezielle mikroskopische Gestalt verantwortlich und andererseits auch günstig, dass Gummi, wie die Oberfläche von Lotusblättern, ein hydrophobes, somit wasserabweisendes Material ist.

Die Noppen 5, 5' können auch von der dargestellten Kuppelgestalt abweichend ausgeführt werden und beispielsweise kegel- oder pyramidenförmig bzw. kegelstumpf- oder pyramidenstumpfförmig ausgeführt sein. Auch in diesen Fällen werden ihre Höhe und ihr gegenseitige Abstand, vorzugsweise auch ihre Breite, in den oben angegebenen Bereichen gewählt bzw. variiert. Auch die Anordnung solcher Noppen kann regelmäßig oder unregelmäßig erfolgen.

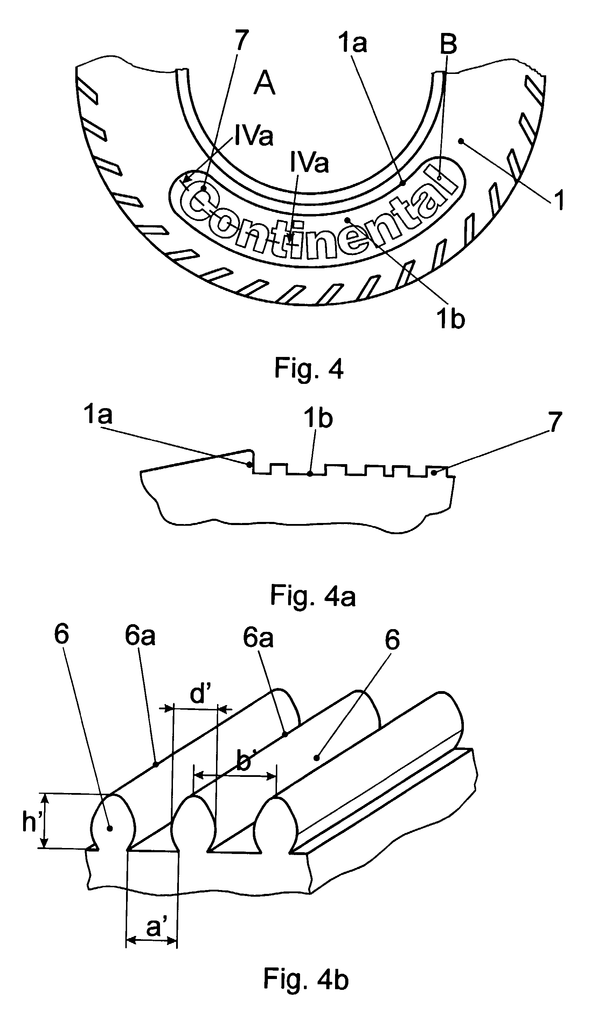

Alternativ zu einer Ausführung der mikroskopischen Gestalt mit einer Vielzahl von Noppen kann eine Riffelung der Oberfläche vorgesehen werden. Unter Riffelung ist dabei eine Anzahl von zueinander zumindest im Wesentlichen parallel verlaufenden Erhebungen 6 zu verstehen, wie sie beispielsweise in **Fig. 4b** dargestellt ist. Die einzelnen Erhebungen 6 besitzen dabei einen kuppelförmigen und mit dem Querschnitt der Noppen aus Fig. 2 übereinstimmenden Querschnitt. Dabei können die einzelnen Erhebungen 6 einen geraden Verlauf aufweisen oder auch beispielsweise leicht bogenförmig gekrümmt verlaufen. Was die gegenseitige Anordnung der einzelnen Erhebungen 6 und ihre Abmessungen betrifft, so wird der Abstand b 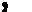 von einander benachbarten Gratbereichen 6a zwischen 4 µm und 40 µm gewählt, insbesondere ≤ 15 µm. Der gegenseitige Abstand a 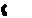 im Bereich der Basis von benachbarten Erhebungen 6 beträgt insbesondere zwischen 5 und 10 µm. Die Höhe h 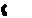 der Erhebungen 6 überragt um mindestens 10 µm die jeweils umgebenden Täler der mikroskopischen Oberflächengestalt, wobei h 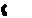 zwischen 10 und 25 µm, insbesondere zwischen 15 bis 20 µm betragen kann. Die Riffelgrate 6a weisen einen Oberflächenkrümmungsradius zwischen 2 µm und 15 µm auf. Auch bei dieser Ausführungsform gilt, dass die für einen bestimmten Oberflächenbereich vorgesehenen Erhebungen 6 auch unterschiedliche Querschnittsflächen aufweisen können.

Die Querschnittsgestalt einer Kuppel ist auch bei dieser Ausführungsform die bevorzugte Querschnittsgestalt. Die Erhebungen 6 können jedoch auch andere Querschnitte, beispielsweise einen dreieckförmigen Querschnitt, aufweisen.

Unabhängig von der makroskopischen Gestalt einer erfindungsgemäß ausgeführten Oberfläche ist ihre mikroskopische Gestalt in ihren Mikroerhebungen dermaßen spitz, dass Schmutzpartikel, die meist um einiges größer sind als der Abstand von Mikroerhebung zu Mikroerhebung, also von Noppe zu Noppe oder von Riffelgrat zu Riffelgrat, nur auf den Spitzen der Noppen bzw. Erhebungen sitzen und daher nur wenig Kontakt und eine sehr kleine Haftungsfläche zum Untergrund haben. Wasser bzw. Wassertropfen ist bzw. sind daher leicht in der Lage, die Schmutzpartikel von den Noppen bzw. Erhebungen mitzunehmen. Erfindungsgemäß ausgeführte Oberflächen haben daher eine hohe Selbstreinigungsfähigkeit.

Wäre nun die Rautiefe der Oberfläche - bis hin zur "glatten" Oberfläche - geringer, wäre einerseits die Haftung von Schmutzpartikeln zum Untergrund größer und andererseits würden Wassertropfen nicht mehr so gut abrollen können. Die Fähigkeit zur Selbstreinigung wäre herabgesetzt oder nicht mehr vorhanden. Bei Noppen bzw. Erhebungen, die größer als oben erwähnt dimensioniert sind, verfangen sich bereits Schmutzpartikel derart leicht, dass sie nur noch schwer freikommen.

Bevorzugte Ausführungen von erfindungsgemäß ausgeführten Oberflächenbereichen in Kombination mit glatt und daher nicht erfindungsgemäß ausgeführten Oberflächenbereichen sind in Fig. 4 bis Fig. 6, wieder anhand der Seitenwand von Fahrzeugreifen, dargestellt und werden nun im Folgenden näher erläutert.

Wie **Fig. 4** zeigt ist hier die beispielhaft mit dem Schriftzug CONTINENTAL versehene Seitenwand 1 so ausgeführt, dass der Schriftzug von einem aus dem umgebenden Oberflächenbereich hoch gezogenen Randbereich 1 a (siehe Fig. 4a) umlaufen ist. Der mittlere Bereich 1b ist daher gegenüber dem umlaufenden Randbereich 1a versenkt, wobei die einzelnen Buchstaben 7 des Schriftzuges gegenüber dem mittleren Bereich 1b wieder etwas angehoben sind, jedoch, was **Fig. 4a** zeigt, den umlaufenden Randbereich 1a nicht überragen. Hier ist die Ausführung ferner so getroffen, dass der Randbereich 1a und der außerhalb an diesen anschließende Bereich der Seitenwand 1 sowie der mittlere Bereich 1b nicht erfindungsgemäß ausgeführt sind, beispielsweise mit einer weitgehend glatt ausgeführten Oberfläche versehen sind. Die einzelnen, etwas erhaben ausgeführten Buchstaben 7 sind mit einer gemäß der Erfindung geriffelt ausgeführten Oberfläche versehen. Anstelle der dargestellten Riffelung kann selbstverständlich auch eine Ausführung mit Noppen oder eine Kombination dieser beiden Varianten, und zwar bei ein und demselben Buchstaben 7 oder bei unterschiedlichen Buchstaben 7, gewählt werden. Wie Fig. 4 zeigt, verläuft hier die Riffelung in Umfangsrichtung der Seitenwand, was eine bevorzugte Anordnung auf der Seitenwand des Reifens ist, um einen guten Selbstreinigungseffekt sicherzustellen.

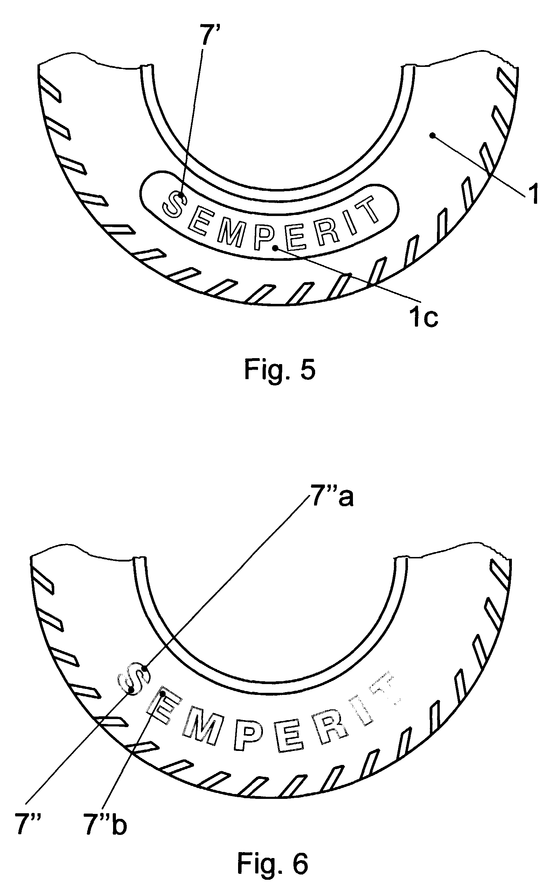

Bei der in **Fig. 5** dargestellten Ausführungsform ist ein Schriftzug, hier der Schriftzug SEMPERIT, in einem gegenüber der sonstigen Oberfläche der Seitenwand 1 leicht erhabenen Oberflächenbereich 1c ausgebildet. Hier ist vorgesehen, dass die Buchstaben 7 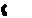 gegenüber dem Oberflächenbereich 1c etwas versenkt und mit einer erfindungsgemäß genoppten Oberflache versehen sind. Auch bei dieser Ausführungsvariante kann anstelle von Noppen eine Riffelung vorgesehen werden oder eine Kombination Noppen mit Riffelung erfolgen.

**Fig. 6** zeigt schließlich noch eine weitere Ausführungsform, wo der auf der Seitenwand 1 ausgebildete Schriftzug, hier wiederum der Schriftzug SEMPERIT, sich aus einzelnen Buchstaben 7 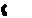 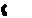 zusammensetzt, die so ausgestaltet sind, dass sie von einem gegenüber der sie außen umgebenden Oberfläche jeweils erhabenen Randbereich 7 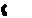 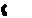 a umlaufen sind, wobei die Randbereiche 7 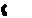 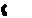 a nicht erfindungsgemäß ausgeführt sind. Hingegen sind die Buchstabeninnenflächen 7 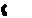 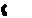 b, die jeweils von einem Randbereich 7 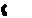 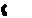 a umschlossen sind, gegenüber ihrem Randbereich 7 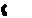 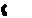 a etwas versenkt und erfindungsgemäß, also geriffelt und/oder genoppt, ausgeführt.

Selbstverständlich kann anstelle eines umlaufenen erhabenen Randes jeweils ein leicht versenkter Rand vorgesehen werden oder es kann dieser Rand jeweils lediglich von schmalen Erhebungen gebildet werden. Die Buchstabeninnenflächen 7 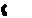 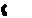 b können ferner auf dem Niveau der umgebenden Seitenwandoberfläche liegen oder dieses auch überragen.

Anstelle der dargestellten Buchstaben können auch Ziffern oder andere Zeichen auf analoger Weise erfindungsgemäß ausgeführt werden.

Wie bereits erwähnt sind erfindungsgemäß ausgeführte Polymerartikel vorzugsweise Gummiartikel und insbesondere Fahrzeugreifen. Es können jedoch auch andere Polymerartikel erfindungsgemäß ausgeführt werden, beispielsweise kann es sich bei erfindungsgemäß ausgeführten Polymerartikel um polymerbeschichtete Textilbahnen handeln, die beispielsweise für Armaturenbrettverkleidungen in Kraftfahrzeugen, für Schlauchboote, Bucheinbände und dergleichen verwendbar sind. Andere Poylmerartikel, die erfindungsgemäß gestaltet werden können, sind Schläuche, Förderbänder, aber auch Schuhsohlen, Pralltöpfe von Lenkrädern, Verkleidungen oder Knaufe von Getriebeschalthebeln, Dichtungsprofile, Dichtungsbälge etc.

Erfindungsgemäß gestaltete Oberflächen lassen sich durch die Anwendung moderner Technologien, beispielsweise durch die Anwendung von Laser, erzeugen, indem die Vulkanisationsform für die Herstellung des Polymerartikels bzw. des mit einer erfindungsgemäßen Oberfläche zu versehenen Teiles desselben entsprechend gestaltet werden, um durch Abformen die erwünschte Oberfläche zu erzielen.

Dazu werden beispielsweise nach einem erfindungsgemäßen Verfahren zur Herstellung einer Form für die Herstellung eines Polymerartikels in die zunächst konventionell glatte Metalloberfläche mittels eines kontinuierlichen oder eines gepulsten Laserstrahles linienrasterförmige bzw. punktraserförmige Vertiefungen eingebracht, zwischen denen erhabene Flächenbereiche stehen bleiben.

Eine weitere, erfindungsgemäße Möglichkeit der Herstellung einer Form zur Herstellung eines erfindungsgemäßen Polymerartikels, insbesondere zur Herstellung einer Vulkanisationsform für die Herstellung eines Gummiartikels, vorzugsweise einen Fahrzeugreifens, sieht vor, dass zunächst ein Vorwerkzeug aus einer erst bei hoher Temperatur schmelzenden Metalllegierung hergestellt wird, wobei in eine konventionell glatte Oberfläche des Vorwerkzeuges mittels einen kontinuierlichen oder gepulsten Laserstrahles linienrasterförmige bzw. punktrasterförmige Vertiefungen eingebracht werden, zwischen denen erhabene Flächenbereiche stehen bleiben. Im Wege des Kopiergießens oder Kopierprägens wird anschließend von der Oberfläche des Vorwerkzeuges eine Vielzahl von Negativabgüssen bzw. Negativabdrücken abgenommen und es werden mehrerer dieser Negativabgüsse bzw. Negativabdrücke zu einem größeren Flächenbereich der Form bzw. Vulkanisationsform zusammengesetzt.

Eine weitere Möglichkeit eines erfindungsgemäßen Verfahrens sieht vor, dass zunächst ein erstes Vorwerkzeug aus einer erst bei hoher Temperatur schmelzenden Metallegierung hergestellt wird, wiederum in eine konventionell glatte Oberfläche des ersten Vorwerkzeuges mittels eines kontinuierlichen oder gepulsten Laserstrahles linienrasterförmige bzw. punktrasterförmige Vertiefungen eingebracht werden, zwischen denen erhabene Flächenbereiche stehen bleiben. Anschließend wird im Wege des Kopiergießens oder Kopierprägens von dieser Oberfläche des ersten Vorwerkzeuges eine Vielzahl von Negativabgüssen bzw. Negativabdrücken abgenommen. Diese Negativabgüsse bzw. Negativabdrücke werden anschließend zu einem größeren Flächenbereich eines zweiten Vorwerkzeuges zusammengesetzt und dieses zu einem Positiv des letztlich herzustellendem Polymerartikels, also zu einem Negativ der herzustellenden Form, zusammengesetzt, und zwar zusammen mit dem nicht geriffelten und nicht genoppten Flächenbereichen. Anschließend werden von diesem zweiten Vorwerkzeug im Wege des Kopiergießens oder Kopierprägens alle Segmente der herzustellenden Form abgenommen.

## Patentansprüche

1. Polymerartikel mit einer sichtbaren Oberfläche,
**dadurch gekennzeichnet,**
dass zumindest ein Teil dieser Oberfläche in solcher Weise geriffelt ist, dass der Abstand (b 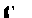 ) von Riffelgrat (6a) zu Riffelgrat (6a) zwischen 4 µm und 40 µm beträgt.

2. Polymerartikel mit einer sichtbaren Oberfläche,
**dadurch gekennzeichnet,**
dass zumindest ein Teil dieser Oberfläche in solcher Weise genoppt ist, dass der Abstand (b 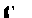 ) von Noppenspitze zu Noppenspitze zwischen 5 µm und 60 µm beträgt.

3. Polymerartikel nach Anspruch 1, dadurch gekennzeichnet, dass der Abstand (b 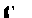 ) von Riffelgrat (6a) zu Riffelgrat (6a) ≤ 15 µm ist.

4. Polymerartikel nach Anspruch 2, dadurch gekennzeichnet, dass der Abstand (b) von Noppenspitze zu Noppenspitze ≤ 20 µm ist.

5. Polymerartikel nach Anspruch 4, dadurch gekennzeichnet, dass der Abstand (b) von Noppenspitze zu Noppenspitze zwischen 15 und 20 µm beträgt.

6. Polymerarikel nach einem der vorhergehenden Ansprüche, dadurch gekennzeichnet, dass der gegenseitige Abstand (6a 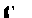 ), der die Riffelung bildenden Erhebungen (6)an deren Basis bzw. gegenseitige Abstand (a) der Noppen (5, 5 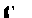 ) an deren Basis zwischen 5 und 10 µm, beträgt.

7. Polymerartikel nach einem der vorangehenden Ansprüche, dadurch gekennzeichnet, dass die Riffelgrate (6a) bzw. die Noppenspitzen um mindestens 10 µm die jeweils umgebenden Täler der mikroskopischen Oberflächengestalt überragen.

8. Polymerartikel nach einem der vorangehenden Ansprüche, dadurch gekennzeichnet, dass die Höhe (h 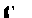 ), der die Riffelung bildenden Erhebungen (6) bzw. der Noppen (5, 5 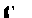 ) zumindest 15 µm beträgt.

9. Polymerartkel nach einem der vorhergehenden Anprüche, dadurch gekennzeichnet, dass die größte Breite (d, d 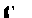 ) der die Riffelung bildenden Erhebungen (6) bzw. der Noppen (5, 5 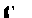 ) zumindest im Wesentlichen mit ihrer jeweiligen Höhe (h, h 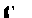 ) übereinstimmt.

10. Polymerartikel nach einem der vorhergehenden Ansprüche, dadurch gekennzeichnet, dass die der Riffelung bildenden Erhebungen (6) bzw. der Noppen (5') zumindest im Wesentlichen übereinstimmende Größe aufweisen.

11. Polymerartikel nach einem der vorhergehenden Ansprüche, dadurch gekennzeichnet, dass die Riffelung bildenden Erhebungen (6) bzw. der Noppen (5, 5 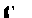 ) zumindest zum Teil unterschiedliche Größen aufweisen.

12. Polymerartikel nach einem der vorhergehenden Ansprüche, dadurch gekennzeichnet, dass die Noppen (5, 5') regelmäßig oder unregelmäßig angeordnet sind.

13. Polymerartikel nach einem der vorhergehenden Ansprüche, dadurch gekennzeichnet, dass die Noppen (5, 5') zumindest im Wesentlichen kuppelförmig gestaltet sind.

14. Polymerartikel nach einem der vorhergehenden Ansprüche, dadurch gekennzeichnet, dass die die Riffelung bildenden Erhebungen (6) einen kuppelförmigen Querschnitt aufweisen.

15. Polymerartikel nach einem der vorangehenden Ansprüche, wobei zumindest ein Teil oder mehrere Teile der sichtbaren Oberfläche geriffelt und/oder genoppt ist bzw. sind, dadurch gekennzeichnet, dass in jedem Riffelgrat (6a) der Oberflächenkrümmungsradius zwischen 2 µm und 15 µm bzw. in jeder Noppenspitze der Oberflächenkrümmungsradius zwischen 3 µm und 25 µm beträgt.

16. Polymerartikel nach einem der vorangehenden Ansprüche, wobei nur ein Teil oder mehrere Teile der sichtbaren Oberfläche geriffelt und/oder genoppt ist bzw. sind, dadurch gekennzeichnet, dass zumindest einer der geriffelten und/oder genoppten Teile gegenüber der übrigen Oberfläche versenkt ist.

17. Polymerartikel nach Anspruch 16, dadurch gekennzeichnet, dass er eine Kombination aus Buchstaben (7) und/oder Ziffern und/oder Markenzeichen trägt, die geriffelt und/oder genoppt sind und insgesamt gegenüber den umgebenden, weder geriffelten noch genoppten Oberflächenbereichen versenkt sind.

18. Polymerartikel nach Anspruch 16, dadurch gekennzeichnet, dass er eine Kombination aus Buchstaben (7 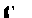 ) und/oder Ziffern und/oder Markenzeichen trägt, die geriffelt und/oder genoppt sind, wobei jeder einzelne Buchstabe (7 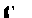 ) bzw. jede einzelne Ziffer bzw. jedes einzelne Markenzeichen gegenüber den umgebenden, weder geriffelten noch genoppten Oberflächenbereichen versenkt ist.

19. Polymerartikel nach Anspruch 16, dadurch gekennzeichnet, dass er zumindest einen Buchstaben (7 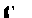 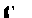 ) und/oder eine Ziffer und/oder ein Markenzeichen trägt, welcher bzw. welche bzw. welches in an sich bekannter Weise einen erhabenen Rand (7 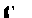 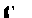 a) aufweist, wobei die vom erhabenen Rand (7 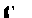 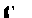 ) umschlossene Fläche (7 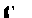 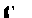 b) des Buchstabens (7 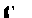 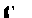 ) bzw. der Ziffer bzw. des Markenzeichens gegenüber dem erhabenen Rande (7 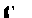 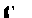 ) versenkt und geriffelt und/oder genoppt ist.

20. Polymerartikel nach einem der vorangehenden Ansprüche, dadurch gekennzeichnet, dass es sich um einen Gummiartikel handelt.

21. Polymerartikel nach Anspruch 20, dadurch gekennzeichnet, dass es sich um einen Fahrzeugreifen handelt.

22. Fahrzeugreifen nach Anspruch 21, dadurch gekennzeichnet, dass sich auf einer seiner Seitenwände (1) geriffelte und/oder genoppte Oberflächenbereiche (7, 7 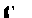 , 7 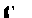 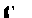 b) befinden.

23. Polymerartikel nach einem der vorangehenden Ansprüche, dadurch gekennzeichnet, dass es sich um eine polymerbeschichtete Textilbahn handelt, die zum Beispiel verwendbar ist für Armaturenbrettverkleidungen in Kraftfahrzeugen, Schlauchboote, Rollos, Bucheinbände und dergleichen.

24. Polymerartikel nach einem der vorangehenden Ansprüche, dadurch gekennzeichnet, dass es sich um einen Schlauch handelt.

25. Gummiartikel nach Anspruch 20, dadurch gekennzeichnet, dass es sich um ein Förderband handelt.

26. Verfahren zur Herstellung einer Form für die Herstellung eines Polymerartikels nach einem der vorangehenden Ansprüche, insbesondere zur Herstellung einer Vulkanisationsform für die Herstellung eines Gummiartikels nach Anspruch 20,
**dadurch gekennzeichnet,**
dass in die zunächst konventionell glatte Metalloberfläche mittels eines kontinuierlichen oder gepulsten Laserstrahles linienrasterförmige bzw. punktrasterförmige Vertiefungen eingebracht werden, zwischen denen erhabene Flächenbereiche stehen bleiben.

27. Verfahren zur Herstellung einer Form für die Herstellung eines Polymerartikels nach einem der vorangehenden Ansprüche, insbesondere zur Herstellung einer Vulkanisationsform für die Herstellung eines Gummiartikels nach Anspruch 20,
**dadurch gekennzeichnet,**
dass zunächst ein Vorwerkzeug aus einer erst bei hoher Temperatur schmelzenden Metalllegierung hergestellt wird,
wobei in eine konventionell glatte Oberfläche des Vorwerkzeuges mittels eines kontinuierlichen oder gepulsten Laserstrahles linienrasterförmige bzw. punktrasterförmige Vertiefungen eingebracht werden, zwischen denen erhabene Flächenbereiche stehen bleiben,
wonach im Wege des Kopiergießens oder Kopierprägens von dieser Oberfläche des Vorwerkzeuges eine Vielzahl von Negativabgüssen bzw. Negativabdrücken abgenommen wird und
wonach diese mehreren Negativabgüsse bzw. Negativabdrücke zu einem größeren Flächenbereich der Form bzw. Vulkanisationsform zusammengesetzt werden.

28. Verfahren zur Herstellung einer Form für die Herstellung eines Polymerartikels nach einem der vorangehenden Ansprüche, insbesondere zur Herstellung einer Vulkanisationsform für die Herstellung eines Gummiartikels nach Anspruch 20,
**dadurch gekennzeichnet,**
dass zunächst ein erstes Vorwerkzeug aus einer erst bei hoher Temperatur schmelzenden Metalllegierung hergestellt wird,
wobei in eine konventionell glatte Oberfläche des ersten Vorwerkzeuges mittels eines kontinuierlichen oder gepulsten Laserstrahles linienrasterförmige bzw. punktrasterförmige Vertiefungen eingebracht werden, zwischen denen erhabene Flächenbereiche stehen bleiben,
wonach im Wege des Kopiergießens oder Kopierprägens von dieser Oberfläche des ersten Vorwerkzeuges eine Vielzahl von Negativabgüssen bzw. Negativabdrücken abgenommen wird,
wonach diese mehreren Negativabgüsse bzw. Negativabdrücke zu einem größeren Flächenbereich eines zweiten Vorwerkzeuges zusammengesetzt werden,
wonach dieses zweite Vorwerkzeug zu einem Positiv des letztlich herzustellenden Polymerartikels, also zu einem Negativ der herzustellenden Form zusammengesetzt wird zusammen mit den nicht geriffelten und nicht genoppten Flächenbereichen,
wonach von diesem zweiten Vorwerkzeug im Wege des Kopiergießens oder Kopierprägens alle Segmente der herzustellenden Form abgenommen werden.
